# EUROPÄISCHE PATENTSCHRIFT

(11) **EP 1 203 041 B1**
(45) Veröffentlichungstag und Bekanntmachung des Hinweises auf die Patenterteilung: **18.11.2009**
(21) Anmeldenummer: 00951347.4
(22) Anmeldetag: 06.07.2000
(51) Int. Cl.: C08G 64/00, C08G 64/30

(54) **VERFAHREN ZUR HERSTELLUNG VON MODIFIZIERTEN POLYCARBONATEN**
METHOD FOR PRODUCING MODIFIED POLYCARBONATES
PROCEDE DE PRODUCTION DE POLYCARBONATES MODIFIES

(30) Priorität: 19.07.1999 DE 19933132
(43) Veröffentlichungstag der Anmeldung: 08.05.2002
(73) Patentinhaber: Bayer MaterialScience AG, 51368 Leverkusen (DE)
(72) Erfinder: KRATSCHMER, Silke, D-47829 Krefeld (DE); HUCKS, Uwe, D-46519 Alpen (DE); BUNZEL, Lothar, D-47906 Kempen (DE)
(86) Internationale Anmeldenummer: PCT/EP2000/006379
(87) Internationale Veröffentlichungsnummer: WO 2001/005866

(56) Entgegenhaltungen:
- EP-A- 0 703 261
- EP-A- 0 726 285
- EP-A- 0 908 484
- DE-A- 19 646 401

## Beschreibung

Gegenstand der vorliegenden Erfindung ist ein Schmelzeumesterungsverfahren zur Herstellung von Polycarbonaten.

Die Herstellung von aromatischen Polycarbonaten nach dem Schmelzeumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie ausgehend von der DE 1 031 512 in einigen Patenten beschrieben. Das Patent EP 360 578 zeigt, daß die Endgruppen eines Polycarbonates, das über Schmelzeumesterung hergestellt wurde, durch Zugabe eines Kettenabbrechers ausgetauscht werden können. Es zeigt sich jedoch, daß jeweils nur ein Teil der Menge an eingesetztem Kettenabbrecher wirklich im Polycarbonat als Endgruppe verbleibt. Da die Mechanik, insbesondere Kettenabbrecher-reicher PC-Typen, insbesondere niedermolekularer und verzweigter PC-Typen, deutlich von den Endgruppen beeinflußt wird, ist ein möglichst vollständiger Ersatz der Phenol-Endgruppen durch andere geeignetere Phenole wünschenswert. Daneben wird das bei der Polykondensation entstehende Phenol bei der Entfernung aus dem Prozeß durch Destillation mit dem Kettenabbrecher verunreinigt, wenn dieser nicht vollständig eingebaut wird. Ein möglichst vollständiger Einbau ist also nicht nur für eine hohe Reaktionsausbeute, sondern auch in Hinsicht auf die Wiederverwendung des abdestillierten Phenols anzustreben.

Die Aufgabe bestand also darin, ein Schmelzeumsterungsverfahren zu finden, das die Produktion von Polycarbonaten ermöglicht, deren Endgruppen teilweise aus anderen Phenolen bestehen als Phenol selbst, wobei möglichst viel des eingesetzten Kettenabbrechers eingebaut werden sollte.

Die Aufgabe wurde gelöst durch ein Verfahren zur Herstellung von Polycarbonaten aus **einem einzigen** Bisphenol, bevorzugt aus Bisphenol A, und **einem** Kohlensäurediester, in Gegenwart eines als Kettenabbrecher geeigneten Phenols, wobei das als Kettenabbrecher verwendete Phenol in freier Form oder als unter den Synthesebedingungen umesterungsfähige Verbindung eingesetzt werden kann, **dadurch gekennzeichnet, daß** als Katalysator Phosphoniumsalze verwendet werden, und 80% oder mehr des als Kettenabbrecher eingesetzten Phenols ins Polycarbonat eingebaut werden.

Phosphoniumsalze im Sinne des erfindungsgemäßen Verfahrens sind solche der Formel (I), 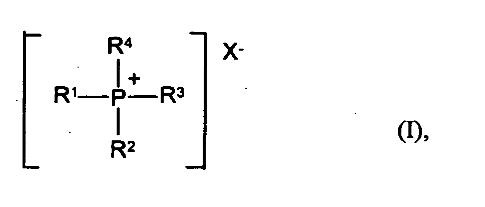
wobei R¹⁻⁴ dieselben oder verschiedene C₁-C₁₈-Alkyle, C₆-C₁₄-Aryle, C₇-C₁₂-Aralkyle oder C₅-C₆-Cycloalkyle sein können, bevorzugt Methyl oder C₆-C₁₄-Aryle, besonders bevorzugt Methyl oder Phenyl, und X⁻ ein Anion wie Sulfat, Hydrogensulfat, Hydrogencarbonat, Carbonat, Acetat, Boranat, Hydrogenphosphate, ein Halogenid, bevorzugt Fluorid, Chlorid oder Bromid, ein Alkoholat der Formel OR sein kann, wobei R C₆-C₁₄-Aryl, C₇-C₁₂-Aralkyl, beovrzugt Phenyl ist. Bevorzugte Katalysatoren sind
Tetraphenylphosphoniumfluorid,
Tetraphenylphosphoniumtetraphenylboranat,
besonders bevorzugt Tetraphenylphosphoniumphenolat.

Natrium-Ionen-Katalysatoren können Hydroxide, Hydrogencarbonate, Carbonate, Alkoholate, Acetate, Boranate, Hydrogenphosphate und Hydride, bevorzugt Hydroxide und Alkoholate, besonders bevorzugt die Natriumsalze der Phenole und Bisphenole wie sie unter Bisphenolen und Kettenabbrechern erwähnt werden und das Natriumsalz von Phenol selbst, ganz besonders bevorzugt das Natriumsalz von 2,2-Bis-(4-hydroxyphenyl)-propan eingesetzt werden.

Als Kettenabbrecher geeignete Alkylphenole im Sinne des erfindungsgemäßen Verfahrens sind solche der Formel (II), 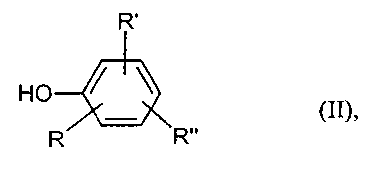
wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise
o-n-Butylphenol, m-n-Butylphenol, p-n-Butylphenol,
o-Isobutylphenol, m-Isobutylphenol, p-Isobutylphenol,
o-tert-Butylphenol, m-tert-Butylphenol, p-tert-Butylphenol,
o-n-Pentylphenol, m-n-Pentylphenol, p-n-Pentylphenol,
o-n-Hexylphenol, m-n-Hexylphenol, p-n-Hexylphenol,
o-Cyclohexylphenol, m-Cyclohexylphenol, p-Cyclohexylphenol,
o-Phenylphenol, m-Phenylphenol, p-Phenylphenol,
o-Isooctylphenol, m-Isooctylphenol, p-Isooctylphenol,
o-n-Nonylphenol, m-n-Nonylphenol, p-n-Nonylphenol,
o-Cumylphenol, m-Cumylphenol, p-Cumylphenol,
o-Naphthylphenol, m-Naphthylphenol. p-Naphthylphenol,
2,5-Di-tert-Butylphenol, 2,4-Di-tert-Butylphenol, 3,5-Di-tert-Butylphenol,
2,5-Dicumylphenol, 3,5-Dicumylphenol,
4-Phenoxyphenol, 2-Phenoxyphenol, 3-Phenoxyphenol
3-Pentadecylphenol, 2-Pentadecylphenol, 4-Pentadecylphenol,
2-Phenylphenol, 3-Phenylphenol, 4-Phenylphenol,
Tritylphenol, 3-Triphenylmethylphenol, 2-Triphenylmethylphenol,
weiterhin Benzotriazolderivate der allgemeinen Formel (III) 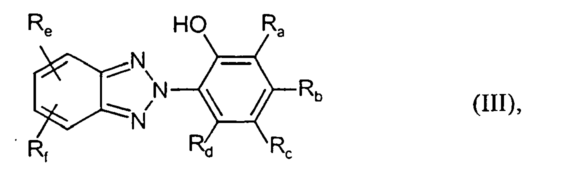 mit der obigen Bedeutung von R, R' und R" für Rₐ- R_{f} und Chromanverbindungen wie 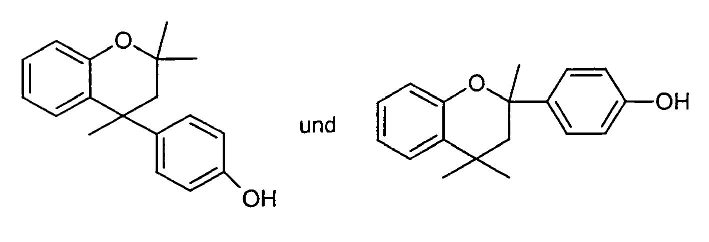 bevorzugt schwersiedende Phenole wie Tritylphenol, Cumylphenol, Phenoxyphenol, Pentadecylphenol oder Chromane,
   oder auch als unter den Synthesebedingungen umesterungsfähige Verbindungen wie z. B. Carbonate, Oxalate, o-Carbonsäureester o. ä., bevorzugt sind die freien Phenole oder die Kohlensäurediester der Formel (IV) 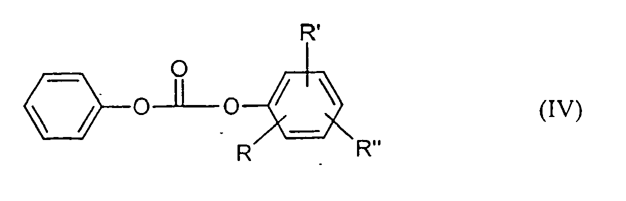 und Formel (V), 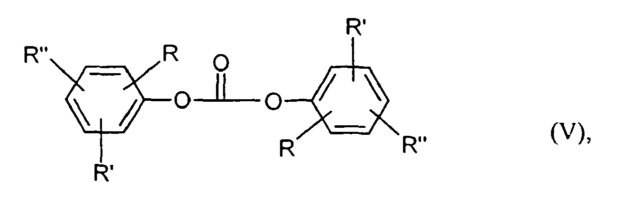 wobei R,R' und R" denen der Formel (II) entsprechen. Phenole oder umesterungsaktive Substanzen können einzeln oder im Gemisch der Synthese zugesetzt werden. Bevorzugte Mischungen sind solche mit Diphenylcarbonat. Nach dem erfindungsgemäßen Verfahren besteht die Möglichkeit, das Phenol oder die phenoltragende Verbindung zu jedem Zeitpunkt der Reaktion zuzugeben, bevorzugt zu Beginn der Reaktion, und die Zugabe kann in mehrere Protionen aufgeteilt werden. Der gesamte Anteil an Kohlensäureester beträgt 100 - 130 mol%, bevorzugt 103 - 120 mol%, bezogen auf die Dihydroxyverbindung.

Für die Herstellung von Polycarbonaten nach dem erfindungsgemäßen Verfahren wird der Kettenabbrecher bevorzugt als Alkylphenol zu 0,4 - 17 mol%, bevorzugt 1,3 - 8,6 mol% (bezogen auf die Dihydroxyverbindung) zugegeben. Dabei kann die Zugabe sowohl vor der Reaktion als auch ganz oder teilweise während der Reaktion erfolgen.

Dihydroxyverbindungen im Sinne des erfindungsgemäßen Verfahrens sind solche der Formel (VI)

HO-Z-OH (VI)

in denen Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyverbindungen der Formel (VI) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'- Bis-(hydroxyphenyl)-diisopropylbenzole
sowie deren kernalkylierte und kernhalogenierte Verbindungen.

Diese und weitere geeignete andere Diphenole sind z. B. in den US-PS 3 028 365, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964" beschrieben.

Bevorzugte Diphenole sind beispielsweise:
4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
α,α'- Bis-(4-hydroxyphenyl)-p-diisopropylbenzol,
α.α'- Bis-(4-hydroxyphenyl)-m-diisopropylbenzol,
Bis-(4-hydroxyphenyl)sulfon,
Bis-(4-hydroxyphenyl)sulfon,
Bis-(4-hydroxyphenyl)methan,
1,1-Bis-(4-hydroxyphenyl)-3,3,5-trimethylcyclohexan,
2,2-Bis-(2,6-dimethyl-4-hydroxyphenyl)propan,
2,2-Bis-(4-hydroxyphenyl)hexafluorpropan,
1,1-(4-Hydroxyphenyl)-1-phenylethan,
Bis-(4-Hydroxyphenyl)diphenylmethan,
Dihydroxydiphenylether,
4,4'-Thiobisphenol,
1,1-Bis-(4-Hydroxyphenyl)-1-(1-naphthyl)ethan,
1,1-Bis-(4-Hydroxyphenyl)-1-(2-naphthyl)ethan,
2,3-Dihydroxy-3-(4-hydroxyphenyl)-1,1,3-trimethyl-1*H-*inden-5-ol,
2,3-Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H-*inden]-5,5'-diol.
Besonders bevorzugt sind
Resorcin,
1,1-Bis-(4-Hydroxyphenyl)-1-(1-naphthyl)ethan,
1,1-Bis-(4-Hydroxyphenyl)-1-(2-naphthyl)ethan,
2,2-Bis-(4-hydroxyphenyl)propan,
α,α'- Bis-(4-hydroxyphenyl)-p-diisopropylbenzol,
α,α'- Bis-(4-hydroxyphenyl)-m-diisopropylbenzol,
1,1-Bis-(4-hydroxyphenyl)cyclohexan,
1,1-Bis-(4-hydroxyphenyl)-3,3,5-trimethylcyclohexan,
Bis-(4-Hydroxyphenyl)diphenylmethan,
4,4'-Dihydroxydiphenyl.

Verzweiger sind die für die Polycarbonatherstellung geeigneten Verbindungen mit drei und mehr funktionellen Gruppen, vorzugsweise solche mit drei oder mehr als drei phenolischen OH-Gruppen. Beispiele für geeignete Verzweiger sind Phloroglucin,
4,6-Dimethyl-2,4,6-tri-(4-hydroxyphenyl)heptan,
1,3,5-Tri-(4-hydroxyphenyl)benzol,
1,1,1-Tri-(4-hydroxyphenyl)ethan,
Tri-(4-hydroxyphenyl)phenylmethan,
2,2-Bis-[4,4-bis(4-hydroxyphenyl)cyclohexyl]propan,
2,4-Bis-(4-hydroxyphenyl-isopropyl)phenol,
2,6-Bis-(2-hydroxy-5-methylbenzyl)-4-methylphenol,
2-(4-H-ydroxyphenyl)-2-(2,4-dihydroxyphenyl)propan,
Hexa-[4-(4-hydroxyphenyl-isopropyl)phenyl]orthoterephthalsäureester,
Tetra-(4-hydroxyphenyl)methan,
Tetra-[4-(4-hydroxyphenyl-isopropyl)phenoxy]methan,
1,4-Bis-[4',4"-dihydroxytriphenyl)methyl]benzol,
α,α',α"-Tris-(4-hydroxyphenyl)-1,3,4-triisopropenylbenzol,
Isatinbiskresol,
Pentaerythrit,
2,4-Dihydroxybenzoesäure,
Trimesinsäure,
Cyanursäure.

Besonders bevorzugt sind 1,1,1-Tri-(4-hydroxyphenyl)-ethan und Isatinbiskresol.

Das erfindungsgemäße Verfahren wird allgemein bei Temperaturen zwischen 75°C bis 325°C und Drücken von 1 bar bis 0,01 mbar ausgeführt.

Die Durchführung des erfindungsgemäßen Verfahrens erfolgt beispielsweise derart, daß in der ersten Stufe das Aufschmelzen der Diphenole, der Kohlensäurediester, des Katalysators und gegebenenfalls der Alkylphenole und Verzweiger bei Temperaturen von 75°C bis 225°C, vorzugsweise von 105°C bis 235°C, besonders bevorzugt von 120°C bis 190°C, unter normalem Druck in 0,1 bis 5 Stunden, bevorzugt in 0,25 bis 3 Stunden erfolgt. Dann wird durch Anlegen von Vakuum und Erhöhung der Temperatur durch Abdestillieren des Monophenols das Oligocarbonat hergestellt. Im letzen Schritt wird bei der Polykondensation durch weiteres Erhöhen der Temperatur auf 240°C bis 325°C und bei einem Druck von <2 mbar das Polycarbonat hergestellt.

Das erfindungsgemäße Verfahren kann sowohl kontinuierlich als auch diskontinuierlich durchgeführt werden, und zwar beispielsweise in Rührkesseln, Dünnschichtverdampfern, Rührkesselkaskaden, Extrudern, Knetern, einfachen Scheibenreaktoren oder Hochviskosreaktoren.

Die Isolierung der erfindungsgemäß erhältlichen Polycarbonate erfolgt beispielsweise durch Austragen, Abspinnen und Granulierung.

Die nach dem erfindungsgemäßen Verfahren erhältlichen Polycarbonate können Gewichtsmittelmolekulargewichte M_{w} zwischen etwa 2 000 und 150 000, vorzugsweise zwischen etwa 4 500 und 55 000 haben, wobei M_{w} über die relative Lösungsviskosität in Dichlormethan oder in Mischungen gleicher Gewichtsmengen Phenol/o-Dichlorbenzol ermittelt wird, wobei die Eichung durch Lichtstreuung erfolgt.

Die erfindungsgemäß erhältlichen Polycarbonate weisen die üblichen literaturbekannten OH-Endgruppengehalte auf, die photometrisch mit Titantetrachlorid ermittelt werden können.

Die nach dem erfindungsgemäßen Verfahren hergestellten Polycarbonate zeigen gute mechanische Eigenschaften, hohe Transparenz und sind frei von Lösungsmitteln.

Der Einbau der eingesetzten Alkylphenole wurde bei Cumylphenol durch ¹³C-, bei den anderen Alkylphenolen durch ¹H-NMR-Spektroskopie ermittelt. Daraus wurde errechnet, wieviel Prozent des eingesetzten Kettenabbrechers im Polycarbonat als Endgruppe vorlag.

Zur Verbesserung der Eigenschaften können den erfindungsgemäß hergestellten Polycarbonaten Hilfs- und Verstärkungsstoffe zugemischt werden. Als solche sind u. a. in Betracht zu ziehen: Stabilisatoren, Fließhilfsmittel, Entformungsmittel, Brandschutzmittel, Pigmente, fein zerteilte Mineralien, Faserstoffe, Thermostabilisatoren wie z. B. Alkyl- und Arylphosphite, -phosphate, -phosphane, niedermolekulare Carbonsäureester, Halogenverbindungen, Salze, Kreide, Quarzmehl, Glas- und Kohlenstoffasern, Pigmente und deren Kombinationen.

Weiterhin können den erfindungsmäßen Polycarbonaten auch andere Polymere zugemischt werden, z. B. Polyolefine, Polyurethane, Polyester und Polystyrol.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Die nach dem erfindungsgemäßen Verfahren erhältlichen Polycarbonate können auf üblichen Maschinen, beispielsweise auf Extrudern oder Spritzgußmaschinen zu beliebigen Formkörpern, beispielsweise zu Folien oder Platten in üblicher Weise verarbeitet werden.

Der technische Einsatz dieser Polycarbonatfomikörper kann beispielsweise in der Optik und in der Elektrotechnik erfolgen.

### Beispiele

### Vergleichsbeispiel 1

In einem 500 ml Dreihalskolben mit Rührer, Innenthermometer und Vigreuxkolonne (30 cm, verspiegelt) mit Brücke werden 45,60 g (0,2 mol) Bisphenol A, 47,08 g (110 mol% bezogen auf Bisphenol A) Diphenylcarbonat, 3,7 mg (0,03 mol% bezogen auf Bisphenol A) Borsäure und 2,12 g (5 mol% bezogen auf Bisphenol A) 4-Cumylphenol eingewogen. Die Apparatur wird durch Anlegen von Vakuum und Spülen mit Stickstoff (dreimal) vom Luftsauerstoff befreit und das Gemisch bei 180°C aufgeschmolzen und 30 Minuten gerührt. Anschließend werden 36,5 mg (0,03 mol% bezogen auf Bisphenol A) einer 15%igen Ammoniumhydroxid-Lösung und 0,5 mg (0,003 mol% bezogen auf Bisphenol A) Natriumhydrogencarbonat zugegeben und weitere 30 Minuten gerührt. Die Temperatur wird auf 210°C und das Vakuum auf 200 mbar erhöht und das entstehende Phenol abdestilliert. Nach 1 Stunde wird die Temperatur auf 240°C erhöht und nach 20 Minuten das Vakuum auf 150 mbar verbessert. Nach weiteren 20 Minuten wird der Druck auf 100 mbar erniedrigt und 20 Minuten gehalten. Anschließend wird für 30 Minuten der Druck auf 15 mbar reduziert. Nun wird die Temperatur auf 270°C erhöht, das Vakuum auf 0,5 mbar verbessert und nochmals 2 Stunden gerührt. Die Ergebnisse sind in Tabelle 1 zusammengefaßt.

### Vergleichsbeispiel 2

Wie Vergleichsbeispiel 1, nur werden 22 mg (0,03 mol% bezogen auf Bisphenol A) einer 25%igen Ammoniumhydroxid-Lösung und 5 mg (0,0003 mol% bezogen auf Bisphenol A) einer 1%igen Natriumhydrogencarbonat-Lösung zugegeben. Die Ergebnisse sind in Tabelle 1 zusammengefaßt.

### Vergleichsbeispiel 3

In einem 500 ml Dreihalskolben mit Rührer, Innenthermometer und Vigreuxkolonne (30 cm, verspiegelt) mit Brücke werden 45,66 g (0,2 mol) Bisphenol A, 47,13 g (110 mol% bezogen auf Bisphenol A) Diphenylcarbonat, 22 mg (0,03 mol% bezogen auf Bisphenol A) einer 25%igen Ammoniumhydroxid-Lösung, 5 mg (0,0003 mol% bezogen auf Bisphenol A) einer 1%igen Natriumhydrogencarbonat-Lösung und 2,12. g (5 mol% bezogen auf Bisphenol A) 4-Cumylphenol eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur wird auf 190°C und das Vakuum auf 100 mbar erhöht und das entstehende Phenol abdestilliert. Nach 20 Minuten wird die Temperatur auf 235°C erhöht und das Vakuum auf 60 mbar verbessert. Nach 15 Minuten wird die Temperatur auf 250°C und nach weiteren 15 Minuten das Vakuum auf 5 mbar erhöht. Anschließend wird auf 280°C aufgeheizt und der Druck nach 15 Minuten auf 0,5 mbar reduziert. Nach wiederum 15 Minuten wird bei 300°C nochmals 30 Minuten gerührt. Die Ergebnisse sind in Tabelle 1 zusammengefaßt.

**Tabelle 1**

| Vergleichsbeispiel | Lösungsviskosität | eingesetztes Alkylphenol [mol%] | gefundenes Alkylphenol [mol%] | Einbau des Alkylphenols [%] |
|---|---|---|---|---|
| 1 | 1,142 | 5 | 3,7 | 74 |
| 2 | 1,167 | 5 | 3,5 | 75 |
| 3 | 1,146 | 5 | 3,8 | 76 |

### Beispiel 1

Wie Vergleichsbeispiel 2, nur werden statt Tetramethylammoniumhydroxid 4,9 mg (0,004 mol% bezogen auf Bisphenol A) Tetraphenylphosphoniumphenolat (wird als Mischkristall mit 30 Gew.% Phenol bezogen auf den Mischkristall zudosiert) zugegeben. Auf die Zugabe von Natriumhydrogencarbonat wird verzichtet. Die Ergebnisse sind in Tabelle 2 zusammengefaßt.

### Beispiel 2

Wie Beispiel 1, es wird jedoch auf die Zugabe von Borsäure verzichtet. Die Ergebnisse sind in Tabelle 2 zusammengefaßt.

### Beispiel 3

Wie Vergleichsbeispiel 3, nur werden 45,66 g (0,2 mol) Bisphenol A, 46,21 g (108 mol% bezogen auf Bisphenol A) Diphenylcarbonat, 4,9 mg (0,004 mol% bezogen auf Bisphenol A) Tetraphenylphosphoniumphenolat (wird als Mischkristall mit 30 Gew.% Phenol bezogen auf den Mischkristall zudosiert) und 1,49 g (4 mol% bezogen auf Bisphenol A) 4-Phenoxyphenol eingewogen.

### Beispiel 4

Wie Beispiel 3, nur werden 45,84 g (107 mol% bezogen auf Bisphenol A) Diphenylcarbonat und 1,22 g (2 mol% bezogen auf Bisphenol A) 3-Pentadecylphenol statt 4-Phenoxyphenol eingewogen.

### Beispiel 5

Wie Beispiel 3, nur werden 45,41 g (106 mol% bezogen auf Bisphenol A) Diphenylcarbonat und statt 4-Phenoxyphenol 3,32 g (5 mol% bezogen auf Bisphenol A) Cumylphenylphenylcarbonat eingewogen. Die Ergebnisse sind in Tabelle 2 zusammengefaßt.

**Tabelle 2**

| Beispiel | Lösungsviskosität | eingesetztes Alkylphenol [mol%] | gefundenes Alkylphenol [mol%] | Einbau des Alkylphenols [%] |
|---|---|---|---|---|
| 1 | 1,134 | 5 | 4,0 | 80 |
| 2 | 1,160 | 5 | 4,2 | 84 |
| 3 | 1,158 | 4 | 3,2 | 80 |
| 4 | 1,161 | 2 | 2,0 | 100 |
| 5 | 1,113 | 5 | 4,2 | 84 |

## Patentansprüche

1. Verfahren zur Herstellung von Polycarbonaten nach dem Schmelzeumesterungsverfahren aus einem einzigen Bisphenol und einem Kohlensäurediester, in Gegenwart eines als Kettenabbrecher geeigneten mit Alkylgruppen substituierten Phenols, wobei das als Kettenabbrecher verwendete Phenol in freier Form oder als unter den Synthesebedingungen umesterungsfähige Verbindung eingesetzt werden kann, **dadurch gekennzeichnet, dass** als Katalysator Phosphoniumsalze der Formel (I) verwendet werden 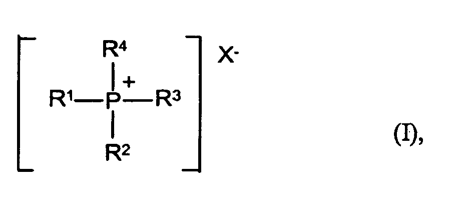 wobei
R¹⁻⁴ gleich oder verschieden ist und Methyl oder C₆-C₁₄-Aryl bedeutet und
X⁻ ein Anion ist,
und 80 % oder mehr des als Kettenabbrecher eingesetzten Phenols ins Polycarbonat eingebaut werden.

2. Verfahren nach Anspruch 1; **dadurch gekennzeichnet, dass** der Phosphonium-Katalysator in Konzentrationen von 10⁻² mol bis 10⁻⁶ mol, bezogen auf 1 mol Diphenol, eingesetzt wird.

3. Verfahren nach Anspruch 1 oder 2, **dadurch gekennzeichnet, dass** der verwendete Katalysator Tetraphenylphosphoniumphenolat ist.

4. Verfahren nach Anspruch 1, wobei X-Sulfat, Hydrogensulfat, Hydrogencarbonat, Carbonat, Acetat, Boranat, Hydrogenphosphat, Halogenid oder ein Alkoholat der Formel OR ist, wobei R C₆-C₁₄-Aryl oder C₇-C₁₂-Aralkyl ist.

5. Verfahren nach Anspruch 4, worin das Bisphenol Bisphenol A ist.

6. Verfahren nach einem der oben genannnten Ansprüche, **dadurch gekennzeichnet, dass** das als Kettenabbrecher verwendete Phenol in Mengen von 0,4 - 17 mol%, bevorzugt 1,3 - 8,6 mol% bezogen auf Bisphenol, eingesetzt wird.

7. Verfahren nach Anspruch 1, **dadurch gekennzeichnet, dass** der Kettenabbrecher Tritylphenol, Cumylphenol, Phenoxyphenol oder Pentadecylphenol ist.

## Claims

1. Process for the preparation of polycarbonates by the melt transesterification process from a single bisphenol and a carbonic acid diester in the presence of a phenol which is substituted by alkyl groups and is suitable as a chain terminator, wherein the phenol used as the chain terminator can be employed in the free form or as a compound which is capable of transesterification under the synthesis conditions, **characterized in that** phosphonium salts of the formula (I) 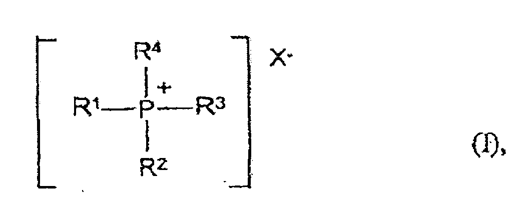 wherein
R¹⁻⁴ are identical or different and denote methyl or C₆-C₁₄-aryl and
X⁻ is an anion,
are employed as a catalyst and 80 % or more of the phenol employed as the chain terminator is incorporated into the polycarbonate.

2. Process according to claim 1, **characterized in that** the phosphonium catalyst is employed in concentrations of from 10⁻² mol to 10⁻⁶ mol, based on 1 mol of diphenol.

3. Process according to claim 1 or 2, **characterized in that** the catalyst used is tetraphenylphosphonium phenolate.

4. Process according to claim 1, wherein X⁻ is sulfate, bisulfate, bicarbonate, carbonate, acetate, boranate, hydrogen phosphate, halide or an alcoholate of the formula OR, wherein R is C₆-C₁₄-aryl or C₇-C₁₂-aralkyl.

5. Process according to claim 4, wherein the bisphenol is bisphenol A.

6. Process according to one of the abovementioned claims, **characterized in that** the phenol used as the chain terminator is employed in amounts of 0.4 - 17 mol%, preferably 1.3 - 8.6 mol%, based on the bisphenol.

7. Process according to claim 1, **characterized in that** the chain terminator is tritylphenol, cumylphenol, phenoxyphenol or pentadecylphenol.

## Revendications

1. Procédé pour la préparation de polycarbonates selon le procédé de transestérification à l'état de fusion à partir d'un seul bisphénol et d'un diester d'acide carboxylique en présence d'un phénol substitué avec des groupes aklyle, approprié comme agent d'interruption de chaîne, le phénol utilisé comme agent d'interruption de chaîne pouvant être utilisé dans une forme libre ou comme composé capable d'une transestérification dans les conditions de synthèse, **caractérisé en ce que** l'on utilise comme catalyseur des sels de phosphonium de la formule (I) 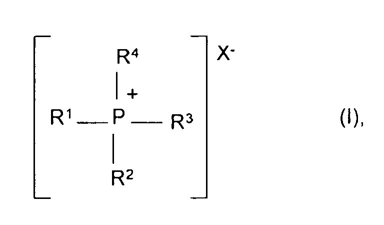 dans laquelle
R¹⁻⁴ sont identiques ou différents et représentent un groupe méthyle ou C₆-C₁₄-aryle et
X⁻ est un anion,
et 80 % ou plus du phénol utilisé comme agent d'interruption de chaîne étant insérés dans le polycarbonate.

2. Procédé selon la revendication 1**, caractérisé en ce que** l'on utilise le catalyseur de phosphonium dans des concentrations de 10⁻² mol à 10⁻⁶ mol rapportées à 1 mol de diphénol.

3. Procédé selon la revendication 1 ou 2, **caractérisé en ce que** le catalyseur utilisé est le phénolate de tétraphénylphosphonium.

4. Procédé selon la revendication 1, dans lequel X- est un sulfate, un hydrogénosulfate, un hydrogénocarbonate, un carbonate, un acétate, un boranate, un hydrogénophosphate, un halogénure ou un alcoolate de la formule OR, R étant un groupe C₁-C₁₄-aryle ou C₇-C₁₂-aralkyle.

5. Procédé selon la revendication 4, dans lequel le bisphénol est le bisphénol A.

6. Procédé selon l'une des revendications citées ci-dessus, **caractérisé en ce que** le phénol utilisé comme agent d'interruption de chaîne est utilisé dans des quantités de 0,4-17 % en mol, de préférence de 1,3-8,6 % en mol, rapportés au bisphénol.

7. Procédé selon la revendication 1, **caractérisé en ce que** l'agent d'interruption de chaîne est le tritylphénol, le cumylphénol, le phénoxyphénol ou le pentadécylphénol.
